# EUROPÄISCHE PATENTSCHRIFT

(11) **EP 3 774 414 B1**
(45) Veröffentlichungstag und Bekanntmachung des Hinweises auf die Patenterteilung: **10.07.2024**
(21) Anmeldenummer: 19718596.0
(22) Anmeldetag: 05.04.2019
(51) Int. Cl.: B60H 1/00, B60H 1/34, F24F 13/15

(54) **BAUKASTENSYSTEM FÜR EINE LUFTAUSSTRÖMERANORDNUNG**
MODULAR SYSTEM FOR AIR VENTS
SYSTÈME MODULAIRE POUR UNE GRILLE D'AÉRATION

(30) Priorität: 11.04.2018 DE 102018108645; 16.01.2019 DE 102019101038
(43) Veröffentlichungstag der Anmeldung: 17.02.2021
(73) Patentinhaber: Dr. Schneider Kunststoffwerke GmbH, 96317 Kronach Bayern (DE)
(72) Erfinder: MÖCKEL, Tobias, 96224 Burgkunstadt (DE)
(74) Vertreter: Isarpatent
(86) Internationale Anmeldenummer: PCT/EP2019/058684
(87) Internationale Veröffentlichungsnummer: WO 2019/197293

(56) Entgegenhaltungen:
- EP-A1- 1 260 391
- WO-A1-2009/129539
- DE-A1- 3 917 036
- DE-U1- 202014 002 016
- FR-A- 1 287 951
- US-A- 3 877 356

## Beschreibung

Es wird ein Baukastensystem für eine Luftausströmeranordnung beschrieben. Die Luftausströmeranordnung umfasst mindestens einen Luftausströmer mit einem Gehäuse und mindestens ein Luftleitelement.

### Hintergrund

Luftausströmer dienen zur Ablenkung von ausgegebener Luft, die von einer Klimaanlage oder einer anderen Belüftungseinrichtung zur Verfügung gestellt wird. Luftausströmer werden bei Fahrzeugen eingesetzt, um Frischluft, temperierte Luft und/oder klimatisierte Luft in den Fahrgastraum eines Fahrzeugs zu bringen. Fahrzeuge können bspw. Kraftfahrzeuge, wie PKW, LKW oder Busse, Züge, Flugzeuge oder Schiffe sein. Bei Luftausströmern kann in der Regel neben der Steuerung der Ablenkung von ausgegebener Luft, bspw. von einer Klimaanlage, auch die Menge an ausgegebener Luft geregelt werden. Die Menge der zugeführten Luft kann über eine Steuereinrichtung geregelt werden, die bspw. mit einer Bedieneinrichtung zum Verschwenken von Lamellen oder getrennt von einer solchen Bedieneinrichtung neben einer Ausströmöffnung angeordnet ist. Die Menge an zugeführter Luft kann bspw. über Drosseleinrichtungen mit Drosselklappen geregelt werden. Luftausströmer können in einem Fahrzeugarmaturenbrett oder im Bereich der A-, B- oder C- Säule oder am Dach eines Kraftfahrzeuges angeordnet sein.

### Stand der Technik

Konventionelle Luftausströmer sind so aufgebaut, dass diese für einen speziellen Einsatzzweck, zum Beispiel für einen speziellen Fahrzeugtyp, ausgestaltet sind. Es können auch Luftausströmer innerhalb eines Fahrzeugs, beispielsweise entlang eines Fahrzeugarmaturenbretts, verschiedene Ausgestaltungen aufweisen, wobei sich die Luftausströmer hinsichtlich der Form und Ausgestaltung der Gehäuse, der Anzahl an Luftleitelementen sowie der Ausgestaltung von Drosseleinrichtungen und vorderseitig angeordneten Blenden unterscheiden.

Es ist daher erforderlich, für jeden einzelnen Fahrzeugtyp und darüber hinaus für jede Position einen separaten Luftausströmer zu konzipieren. Dadurch entstehen erhebliche Kosten, da die Luftausströmer in geringerer Stückzahl gefertigt werden können und für jeden Anwendungsfall ein separater Luftausströmer konzipiert und gefertigt werden muss.

Der dadurch entstehende Mehraufwand verursacht hohe Kosten und einen enorm hohen Zeitaufwand. Zudem muss für jeden Luftausströmer eine Überprüfung der Ausströmperformance durchgeführt werden.

DE 39 17 036 A1, DE 20 2014 002 016 U1 und FR 1 287 951 A offenbaren einen Luftausströmer mit einem Gehäuse oder Rahmen mit einer Ausströmöffnung für zugeführte Luft. An die Luftausströmöffnung grenzen gegenüberliegende Seitenwände an, die korrespondierende und komplementäre Verbindungselemente aufweisen. Diese Gestaltung des Luftausströmers erlaubt ein seitlichis aneinanderreihen und verbinden mehrerer dentischer solcher Luftausströmer zu einer zusammenhängenden Ausströmeranordnung.

In US 3 877 356 A ist eine Belüftungseinrichtung mit einem eine längliche Öffnung aufweisenden Rahmen offenbart. In die längliche Öffnung können nebeneinander mehrere austauschbare Module mit verschiedenen Abmessungen und Formen, aber stets einer schrägen Ablenkfläche eingesetzt werden, um einen durch die längliche Öffnung austretenden Luftstrom abzulenken.

Das Dokument EP1260391 A1 zeigt eine weitere Anordnung von Luftausströmermodulen.

### Aufgabe

Es besteht demgegenüber die Aufgabe darin eine Lösung anzugeben, welche die Nachteile des Standes der Technik behebt. Zudem soll eine Lösung angegeben werden, welche eine universelle Einsetzbarkeit und Aufbau von Luftausströmern bietet.

### Lösung

Die vorstehend genannte Aufgabe wird durch ein Baukastensystem für eine Luftausströmeranordnung für Fahrzeuge gemäß Anspruch 1 gelöst, aufweisend mindestens ein erstes Modul und ein zweites Modul, wobei die Module zur Luftführung, zur Luftablenkung, zur Luftmengenregulierung, zur Luftmengenaufteilung, zur Luftmengenzusammenführung, zur Luftzu- und/oder Abfuhr, zur Luftbehandlung und/oder zur Inszenierung dienen, und wobei die Module jeweils erste Befestigungselemente aufweisen, die eine Befestigung der mindestens zwei Module ermöglichen, wobei die mindestens zwei Module über die ersten Befestigungselemente in beliebiger Reihenfolge und Anzahl in Luftströmungsrichtung hintereinander miteinander verbindbar sind.

Das Baukastensystem ermöglicht es, Luftausströmer bereitzustellen, die auf eine Anzahl an fertigen Modulen zurückgreifen, wobei die Module entsprechend den Anforderungen ausgewählt und in beliebiger Reihenfolge miteinander verbindbar sind. Es ist damit auch möglich, beispielsweise zwei gleiche Module hintereinander anzuordnen. Ferner ist es über die ersten Befestigungselemente möglich, die Module nicht nur beliebig hintereinander zu verbinden, sondern auch die Module beispielsweise um 180 Grad zu verdrehen und/oder mit einem benachbarten Modul zu verbinden. Das Verdrehen kann um die Längs oder Querachse der Module durchgeführt werden.

Hierzu ist eine spezielle Ausgestaltung der ersten Befestigungselemente maßgeblich. Diese ermöglichen eine frei wählbare Anordnung der Module miteinander.

Die Module selbst können unterschiedlich ausgestaltet sein und hierbei für verschiedene Funktionen entsprechende Elemente und Gestaltungen aufweisen. Wesentlich ist, dass die Module Kontaktbereiche aufweisen, die eine Verbindung der Module ermöglichen. Die Kontaktbereiche sind so ausgebildet, dass die Module an den Kontaktbereichen aneinander anliegen und über die ersten Befestigungselemente miteinander verbunden werden. Die Kontaktbereiche können dichtend ausgebildet sein, sodass kein Entweichen von Luft, welche durch die Module geführt wird, über die Kontaktbereiche auftreten kann.

Die Module sind daher in ihrer Ausgestaltung im Wesentlichen so ausgebildet, dass diese ähnliche oder identische Querschnitte aufweisen, damit diese miteinander verbindbar sind und gegenüber der Umgebung abdichten. Das Baukastensystem kann ferner Module aufweisen, die größere Querschnitte umfassen, sodass verschiedene

Luftausströmeranordnungen mit unterschiedlichen Querschnitten bereitgestellt werden können. Dabei können Module vorgesehen sein, die eine Querschnittsverkleinerung oder Vergrößerung bereitstellen. Die Verkleinerung oder Vergrößerung kann auch durch die Anordnung der Verbindungsmodule festgelegt werden. Es können auch weitere Module vorgesehen sein, die eine Aufteilung eines Luftstroms ausgehend von einem Modul oder Luftkanal auf zwei, drei oder mehrere Module ermöglichen. Solche Verbindungsmodule können dann auch als Weichen ausgebildet sein, um den Luftstrom zu den jeweiligen danach gelagerten Modulen zu steuern.

Auch ein Luftkanal der Luftausströmeranordnung kann dabei aus verschiedenen Modulen gebildet werden, die miteinander beliebig verbindbar sind. Daher können aus einer relativ geringen Anzahl an Modulen verschiedenartige Luftausströmeranrodnungen bereitgestellt werden, wobei auf vordefinierte Teile zurückgegriffen wird.

Die Module weisen erfindungsgemäß ein Gehäuse auf, an dem die ersten Befestigungselemente angeordnet sind, wobei die Gehäuse der Module über die ersten Befestigungselemente miteinander verbindbar sind. Die Gehäuse weisen zudem Kontaktstellen (Kontaktbereiche) auf über welche die Gehäuse aneinander im verbundenen Zustand anliegen. Diese Kontaktbereiche können umlaufende Dichtungen umfassen. Die Dichtungen können in einem 2-Komponenten Spritzgussverfahren an Gehäuse und Module aus Kunststoff angebracht sein. In alternativen Ausführungen können auch Dichtungselemente aus Schaum, einem thermoplastischen Elastomer (TPE) oder beispielsweise Silikon nachträglich angebracht werden. Die Verbindung kann beispielsweise über ein Verkleben erfolgen.

Mindestens ein Gehäuse besteht erfindungsgemäß aus mindestens zwei Gehäuseteilen, die über zweite Befestigungselemente miteinander verbindbar sind. Dies ermöglicht die einzelnen Gehäuse entsprechend den Anforderungen unterschiedlich auszugestalten. Dabei können sich die Gehäuseteile im Hinblick auf die Länge im Hinblick auf einen Strömungsweg der Luft, den Querschnitt des über die Gehäusehälften gebildeten Luftkanals und der weiteren Befestigungselemente zur Lagerung von zusätzlichen Komponenten unterscheiden.

Die Gehäuse und die Module selbst können überwiegend aus Kunststoff bestehen und sind daher in einem Spritzgussverfahren, unter anderem in einem Mehrkomponentenspritzgussverfahren, kostengünstig und schnell herstellbar.

Mindestens ein Gehäuse weist erfindungsgemäß zwei Paare gegenüberliegender Seitenwände auf, wobei die Seitenwände über zweite Befestigungselemente miteinander verbindbar sind. Die Fertigung der Module wird dabei weiter vereinfacht, weil die Gehäuse aus Seitenwänden gebildet werden, die dabei im wesentlichen plattenförmig ausgestaltet sind. Dies wirkt sich insoweit positiv auf die Herstellung der Seitenwände aus, da keine Schieber oder sonstige Einrichtungen bei den Spritzgusswerkzeugen erforderlich sind. Zudem können dann mehrere Seitenwände schneller gefertigt werden. Das Zusammenfügen der Seitenwände erfolgt über die zweiten Befestigungselemente, analog zu den zwei Gehäuseteilen, wobei ein Modulgehäuse bereitgestellt wird. Die Seitenwände wie auch die Gehäuseteile können Lageraufnahmen für beispielsweise Luftleitelemente oder Drosselklappen aufweisen. Zudem können auch Strukturen, Halteeinrichtungen oder sonstige Anformungen bzw. Durchbrüche vorgesehen sein, über welche weitere Komponenten in das Gehäuse hinein oder herausgeführt bzw. gelagert werden.

Die Gehäuse können dritte Befestigungselemente aufweisen, über welche Bedien-, Regel-, Beleuchtungs- und/oder Koppeleinrichtungen anfügbar sind. Die dritten Befestigungselemente können sowohl auf der Innenseite als auch auf der Außenseite der Gehäuse vorgesehen sein. vorzugsweise sind die Gehäuse so ausgebildet, dass beispielsweise Bedieneinrichtungen verschiedener Art, beispielsweise manuelle oder motorisch angesteuerte alternativ als auch gemeinsam vorgesehen sein können. Die Gehäuse sind daher von Grund auf so ausgebildet, dass unabhängig ob eine manuelle oder elektrische Ansteuerung vorgesehen ist, die zur Lagerung erforderlichen Anformungen bereits vorgesehen sind. Es muss daher keine Anpassung der Gehäuse an verschiedene Konzepte bzw. Ausführungen von Luftausströmeranordnungen vorgenommen werden.

Über die dritten Befestigungselemente können in weiteren Ausführungsformen zwei Gehäuse direkt miteinander oder über ein Verbindungsmodul, das korrespondierende vierte Befestigungselemente aufweist, verbindbar sein. Es können dabei mehrere dritte Befestigungselemente vorgesehen sein, sodass sowohl eine Lagerung von Bedien-, Regel-, Beleuchtungs- und/oder Koppeleinrichtungen möglich ist als auch eine Verbindung zweier Gehäuse miteinander. Das Verbindungsmodul kann so ausgebildet sein, dass eine parallele Anordnung von Modulen möglich ist. Die Module können auch so ausgebildet sein, dass eine winklige Anordnung in beliebiger Ausrichtung zueinander möglich ist. Auch können die Verbindungsmodule flexible Abschnitte aufweisen, sodass die Anordnung der Module, die über das Verbindungsmodul miteinander verbunden sind, veränderbar ist. hierzu können zusätzlich Arretierungseinrichtungen vorgesehen sein.

Die Module können über die ersten Befestigungselemente mit einem Luftkanal und/oder einer Belüftungseinrichtung verbindbar sein, wobei die entsprechenden Anschlussstellen (Kontaktbereiche) korrespondierende erste Befestigungselemente aufweisen. Die Belüftungseinrichtung kann beispielsweise eine Klimaanlage sein, die mit der Luftausströmeranordnung, aufweisend einen Luftkanal aus Modulen, verbindbar ist. An den Kontaktstellen sind zudem Dichtungen vorgesehen, wobei die Gehäuse hierzu Kontaktabschnitte aufweisen, sodass kein Luftaustritt auftritt.

Die Module können mindestens ein Luftleitmodul, ein Beleuchtungsmodul, ein Belüftungsmodul, ein Reinigungsmodul, ein Blendenmodul, ein Drosselmodul und/oder ein Filtermodul aufweisen. Ein Luftleitmodul kann mindestens eine erste Gruppe von Lamellen aufweisen, die um eine definierte Schwenkachse im Gehäuse gelagert sind. Ein Beleuchtungsmodul kann Beleuchtungseinrichtungen, wie Leuchtdioden, Lichtleiter und beleuchtbare Komponenten aufweisen. Hierüber kann eine Beleuchtung der Luftausströmeranordnung erfolgen. In weiteren Ausführungsformen kann das Gehäuse des Beleuchtungsmoduls selbst beleuchtbar sein, sodass ein entsprechender Abschnitt illuminiert wird und dieser Abschnitt zur Beleuchtung des Luftkanals und damit der Luftausströmeranordnung führt. Ein Beduftungsmodul kann Düsen aufweisen, über welche Duftstoffe dem durchströmenden Luftstrom beigefügt werden können. Ein Reinigungsmodul kann Filtereinrichtungen umfassen, die Feststoffe, wie beispielsweise Staub herausfiltern. Ein Blendenmodul wird klassischer Weise als Abschlusselement auf ein Modul aufgebracht und bildet das Sichtteil der Luftausströmeranordnung, beispielsweise in einem Fahrzeugarmaturenbrett eines Kraftfahrzeugs. Das Blendenmodul selbst kann dabei auch feststehende oder verschwenkbare Luftleitelemente aufweisen. Das Blendenmodul kann insbesondere so ausgebildet sein, dass dieses nur auf einer Seite am Gehäuse erste Befestigungselemente aufweist, sodass die gegenüberliegende Seite frei von Befestigungselementen ist. Dies ermöglicht das Blendenmodul nur geringfügig variabel an den Modulen anzubringen, jedoch ist es möglich das Blendenmodul auf die verschiedenen Module beliebig aufzusetzen. Zudem kann zum Erreichen verschiedener Designs für die Luftauströrmeranordnung ein Austausch des Blendenmoduls erfolgen. In Abhängigkeit der gewünschten Ausgestaltung wird dann ein entsprechendes Blendenmodul ausgewählt und auf die Luftausströmeranordnung aufgesetzt, sodass mittels des Baukastensystems sämtlichen Anforderungen und optischen Wünschen Rechnung getragen werden kann. In weiteren Ausführungsformen können Abschlusselemente auf Befestigungselemente von Blendenmodulen aufsetzbar sein, um diese zu verdecken. Ein Drosselmodul kann beispielsweise eine Drosselklappe aufweisen, die verschwenkbar gelagert ist, um die Luftstrommenge zu regulieren. Ein Filtermodul kann Filter und andere Einrichtungen aufweisen, die sowohl zu mechanischen als auch zur chemischen Luftreinigung dienen. Ferner sind fotokatalytische Reinigungsflächen zu nennen, wobei über eine IR-Diode die Flächen bestrahlt werden, um eine Reinigung der durchströmenden Luft zu erreichen. Dabei können insbesondere flüchtige organische Verbindungen (VOC) aus dem austretenden Luftstrom beseitigt werden.

Die Module können mindestens ein Luftleitelement und/oder mindestens eine Drosselklappe aufweisen. Luftleitelemente können beispielsweise Lamellen sein. Die Anordnung der Module zueinander ermöglicht es dann beispielsweise sogenannte H-Lamellen vor oder nach sogenannten V-Lamellen anzuordnen. Dazwischen können beispielweise weitere Module, wie ein Beleuchtungsmodul, ein Reinigungsmodul oder ein Filtermodul angeordnet werden. Die Reihenfolge der einzelnen Module zueinander sowie deren Orientierung lassen sich beliebig anpassen.

Die Module können dabei aus mindestens zwei unterschiedlichen Modulen auswählbar sein, wobei die unterschiedlichen Module sich im Hinblick auf die Länge, Breite, Dicke, Material, Anzahl an Lageröffnungen für Luftleitelemente, Drosselklappen, Anzahl, Ausbildung und Gestalt von Luftleit- und/oder Drosselelementen, Filtereinrichtungen, Beleuchtungseinrichtungen, Beduftungseinrichtungen und/oder der äußeren Gestalt etc. unterscheiden.

Die Befestigungselemente können Rastelemente, Stifte, Haken, Einstecköffnungen sowie allgemeine Verbindungsmittel aufweisen, die so angeordnet und ausgebildet sind, dass eine beliebe Anordnung der einzelnen Module in beliebiger Reihenfolge und beliebiger Orientierung möglich sein kann.

Die Modulbauweise nach dem Baukastenprinzip ermöglicht es gleiche Luftausströmeranordnungen für verschiedene Fahrzeugtypen und Arten zu verwenden, wobei durch die Modulbauweise Kosten reduziert werden können. Die Verwendung der Module zur Ausbildung von Luftausströmeranordnungen für eine Vielzahl an Fahrzeugen bietet offensichtlich eine Vielzahl an Vorteilen, beispielsweise hinsichtlich Bereitstellung, Herstellung, Wartung, Werkzeug, Kosten, Umwelt, etc.

Mehrere Luftausströmeranordnungen können darüber hinaus sowohl nebeneinander als auch übereinander angeordnet werden.

Auch eine Kombination ist möglich, wodurch sich verschiedene Ausströmeranordnungen mit mehreren Luftausströmeranordnungen realisieren lassen.

In weiteren Ausführungsformen können Luftleitelemente einzelner Module direkt oder über Kupplungen mit Luftleitelementen benachbarter Luftausströmeranordnungen, wobei die Luftausströmanordnungen übereinander oder nebeneinander angeordnet sind, sein, sodass über eine einzelne Bedien- oder Ansteuereinrichtung ein Verschwenken sämtlicher oder mehrerer Luftleitelemente oder Drosselklappen erfolgen kann.

An die Module können Antriebseinrichtungen angebracht werden, die mit Luftleitelementen, Drosseleinrichtungen usw. koppelbar sind. Eine Antriebseinrichtung kann einen elektronischen, elektrischen, elektromechanischen, hydraulischen, pneumatischen oder mechanischen Antrieb aufweisen. Es können auch Elektromotoren, Bedienräder, Bedienelemente usw. vorgesehen sein.

Zur Kupplung von verschwenkbaren Elementen, wie beispielsweise Drosselklappen und Luftleitelementen benachbarter Luftausströmeranordnungen kann eine Verbindungswelle vorgesehen sein, die flexibel ausgebildet ist, sodass eine beliebige Ausrichtung der beiden Luftausströmeranordnungen zueinander realisierbar ist und auf ein weiteres Standardbauteil als Modul zurückgegriffen werden kann.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine schematische Darstellung einer Luftausströmeranordnung;
- Fig. 2: eine schematische Darstellung einer weiteren Luftausströmeranordnung;
- Fig. 3: eine schematische Explosionszeichnung eines aus vier Seitenwänden bestehenden Gehäuses;
- Fig. 4: eine schematische Darstellung einer noch weiteren Luftausströmeranordnung;
- Fig. 5: eine schematische Darstellung zweier Module mit Befestigungselementen; und
- Fig. 6: eine noch weitere schematische Darstellung zweier Module mit Befestigungselementen.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

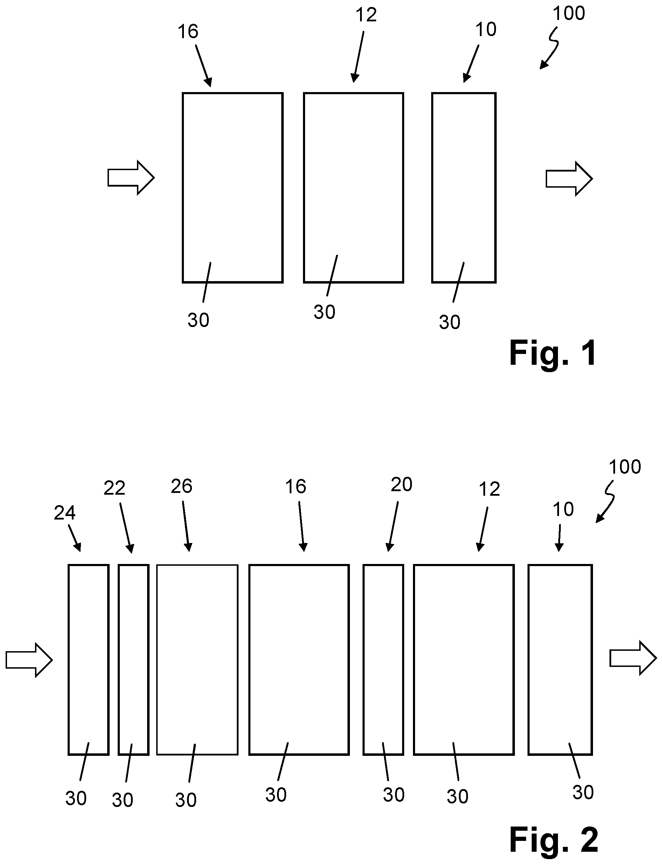

Die Fig. 1 bis 6 zeigen verschiedene Ausführungen von Luftausströmeranordnungen 100 sowie Bestandteilen und Ausführungsformen der jeweiligen Anordnungen. Eine solche Luftausströmeranordnung 100 kann erfindungsgemäß in einem Fahrzeug eingesetzt und mit einer Klimaanlage oder einer anderen Belüftungseinrichtung verbunden werden. Die Luftausströmeranrodnungen können hierzu in einem Fahrzeugarmaturenbrett im Bereich der A-, B- oder C-Säule sowie im Bereich der hinteren Sitzreihen vorgesehen sein. Die Klimaanlage oder die andere Belüftungseinrichtung stehen über Luftkanäle mit solchen Luftausströmeranordnungen 100 in Verbindung. Dabei können die Luftkanäle auch Teil der Luftausströmeranordnungen 100 sein.

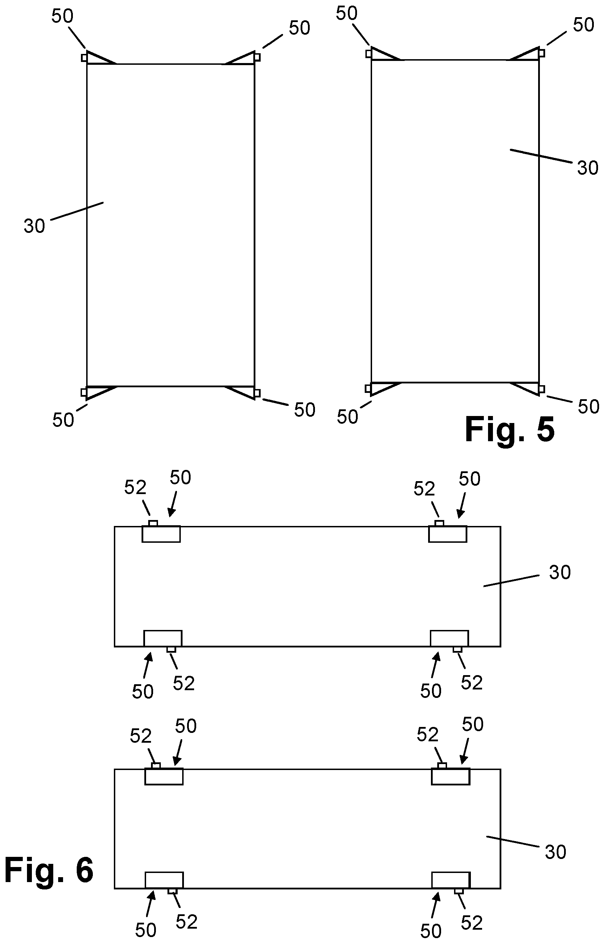

Fig.1 zeigt eine schematische Darstellung einer Luftausströmeranordnung 100, die aus drei einzelnen Modulen besteht. Die Luftausströmeranordnung 100 weist ein Blendenmodul 10, ein erstes Luftleitmodul 12 und ein zweites Luftleitmodul 16 auf. Die Module umfassen Gehäuse 30, die Befestigungselemente 50 aufweisen, wie in Fig. 5 und 6 gezeigt. Die Gehäuse 30 bestehen aus Kunststoff und sind in einem Spritzgussprozess hergestellt, wodurch sich eine einfache Herstellung ergibt. In den Gehäusen 30 des ersten Luftleitmoduls 12 und des zweiten Luftleitmoduls 16 sind Lamellen 14 und 18 aufgenommen. Diese Lamellen 14, 18 sind um ihre Längsachsen verschwenkbar in den Modulen gelagert. Die Lamellen 14 des ersten Luftleitmoduls 12 sind um eine orthogonal zu den Lamellen 18 des zweiten Luftleitelementes 16 verlaufende Schwenkachse im Gehäuse 30 gelagert. Das Blendenmodul 10 in der gezeigten Ausführungsform weist keine verschwenkbar gelagerten Luftleitelemente auf. Das Blendenmodul 10 kann aber quer verlaufende Stege, walzenförmige Körper, Gitter oder andere Einrichtungen aufweisen, die im Bereich einer Luftaustrittsöffnung vorgesehen sind. Die Strömungsrichtung der durchströmenden Luft ist über die Pfeile schematisch angegeben.

Ein Luftleitmodul kann an jeder Gehäuseseite Befestigungselemente aufweisen, so dass bei einem im Wesentlichen quadratischen Querschnitt eine Rotation des Moduls um 90° anstelle eines V-Lamellenmoduls ein H-Lamellenmodul und umgekehrt bereitstellt.

Die Luftausströmeranordnung 100 aus Fig. 1 stellt einen Luftausströmer bereit, der eine Luftablenkung in verschiedene Richtungen bereitstellt. Über ein gemeinsames Verschwenken der Lamellen 14 und 18 kann auch eine gekoppelte Luftablenkung erreicht werden. Die Gehäuse 30 weisen Anschlussbereiche (Kontaktbereiche) auf, die im verbundenen Zustand der Luftausströmeranordnung 100 an einem identisch ausgebildeten Kontaktbereich des anderen Moduls anliegen. Die Module sind über die Befestigungselemente 50 so miteinander verbunden, dass über die umlaufenden Kontaktstellen kein Leckluftstrom austreten oder Luft eintreten kann.

Zur Bereitstellung der Luftausströmeranordnung 100 werden aus einer Anzahl an einzelnen Modulen die Module ausgewählt und in der benötigten Reihenfolge, Anzahl und Orientierung zueinander angeordnet. Durch die modulartige Ausgestaltung mit den Anlage- und Kontaktbereichen sowie den Befestigungselementen 50 ist es beispielsweise möglich, dass erste Luftleitmodul 12 in Luftströmungsrichtung dem zweiten Luftleitmodul 16 vorgelagert anzuordnen. In diesem Fall kann beispielsweise auch das zweite Luftleitmodul 16 direkt mit dem Blendenmodul 10 verbunden werden. Die Module werden aus einem Vorrat an verschiedenen Modulen ausgewählt, wobei auch unterschiedliche erste Luftleitmodule 12 und zweite Luftleitmodule 16 vorgesehen sein können. Auch die Blendenmodule 10 können sich unterscheiden, sodass im Hinblick auf die gewünschte optische Ausgestaltung ein entsprechendes Blendenmodul 10 ausgewählt wird. Weist ein Blendenmodul 10 zusätzlich verschwenkbar gelagerte Luftleitelemente auf, so kann beispielsweise auf ein erstes Luftleitmodul 12 oder ein zweites Luftleitmodul 16 oder beide verzichtet werden.

Da zumindest die Luftleitmodule 12 und 16 auf beiden Seiten erste Befestigungselemente 50 aufweisen, kann beispielsweise in dem Ausführungsbeispiel von Fig. 1 an die linke Seite des zweiten Luftleitmoduls 16 ein Anschlussmodul 24 (wie in Fig. 2 gezeigt) angeschlossen werden, das mit einem Luftkanal verbunden ist. Der Luftkanal selbst kann einzelne Module aufweisen, die erste Befestigungselemente aufweisen, die an einem Gehäuse mit einem umlaufenden Anschluss vorgesehen sind. Dadurch lassen sich Luftkanäle durch verschiedenartig ausgebildete Luftkanalmodule bilden, die entsprechend des Modulgedanken und dem Baukastenprinzip in beliebiger Anordnung und Reihenfolge miteinander verbunden werden können.

Es können ferner Module mit größeren Querschnitten oder kleineren Querschnitten vorgesehen sein. Solche Module können in Luftausströmeranordnungen 100 durch entsprechende Verbindungsmodule eingebunden werden, wobei die Verbindungsmodule einen Kontaktabschnitt mit einem geringeren und einen Kontaktabschnitt mit einem größeren Durchmesser aufweisen. Es können auch Luftausströmeranordnungen 100 gebildet werden, die größere oder kleinere Querschnitte aufweisen als andere Luftausströmeranordnungen 100, wobei sämtliche Module den entsprechend größeren oder kleiner Querschnitt aufweisen.

Fig. 2 zeigt eine schematische Darstellung einer weiteren Luftausströmeranordnung 100. Die Luftausströmeranordnung 100 weist ein Blendenmodul 10, ein daran befestigtes erstes Luftleitmodul 12, ein daran befestigtes Beleuchtungsmodul 20, und ein daran befestigts zweites Luftleitmodul 16 auf, wobei an das zweite Luftleitmodul 16 ein Drosselmodul 26, ein Filtermodul 22 und abschießend ein Anschlussmodul 24 angebracht sind. Das Drosselmodul 26 weist eine Drosselklappe auf, die zur Luftmengenregulierung vorgesehen ist. Das Filtermodul 22 filtert die durchströmende Luft und kann hierzu beispielsweise photokatalytische Reinigungsflächen aufweisen, die über eine IR-Iode aktivierbar sind. Das Beleuchtungsmodul 20 weist Beleuchtungselemente auf, die Licht in den Luftkanal, der durch die einzelnen Module gebildet wird, einbringen, sodass der Luftausströmer über das Blendenmodul 10 eine Beleuchtung zeigt.

Bei den Ausführungen in den Fig. 1 und 2 kann die Reihenfolge der einzelnen Module verändert werden. Zudem können weitere Module hinzugefügt oder herausgenommen werden, ohne dass hierbei besondere Vorkehrungen getroffen werden müssen. Zudem ist es möglich, einzelne Module beispielsweise in ihrer Ausrichtung um 180 Grad zu drehen, sodass hierüber beispielsweise eine untere Beleuchtungsschiene dann auch in einem oberen Abschnitt und umgekehrt angeordnet werden kann.

Der Querschnitt der einzelnen Module kann rechteckig, quadratisch, rund, elliptisch oder anderweitig sein. Insbesondere können im wesentlichen rechteckige bzw. quadratische Querschnitte Abschrägungen oder Verrundungen in den Eckbereichen aufweisen.

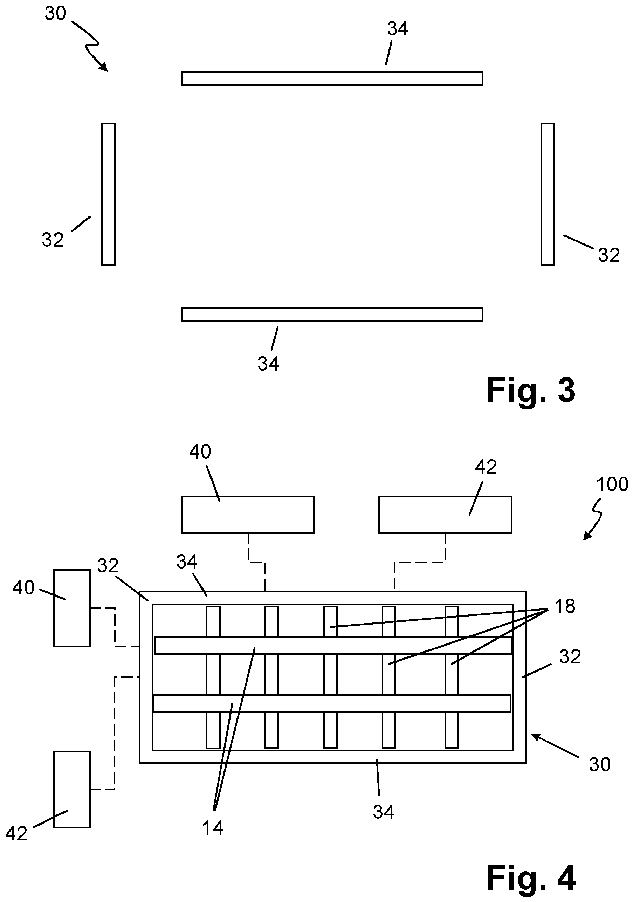

Fig. 3 zeigt eine schematische Explosionszeichnung eines aus vier Seitenwänden 32, 34 bestehenden Gehäuses 30 eines Moduls. Die Bereitstellung des Moduls erfolgt über ein Zusammenfügen zweier Paare Seitenwände 32 und 34, welche hierzu zweite Befestigungselemente aufweisen. Über die zweiten Befestigungselemente werden die Seitenwände 32 und 34 miteinander verbunden. Die Seitenwände 32 und 34 können in Abhängigkeit der entsprechenden gewünschten Gestalt und im Querschnitt ausgetauscht werden. So können beispielsweise längere Seitenwände 34 durch kürzere oder längere Seitenwände 34 ausgetauscht werden, um ein entsprechendes Gehäuse 30 bereitzustellen. Auch können die Seitenwände 32 durch entsprechend größere oder kleinere Seitenwände 32 ersetzt werden. Auch die Tiefe der Seitenwände 32, 34 kann durch entsprechende Auswahl der Seitenwände 32, 34 verändert werden. Die Seitenwände 32, 34 können Lageröffnungen für die Lamellen 34, 18 oder andere Einrichtungen aufweisen. Auch können Anformungen und Haltelemente vorgesehen sein, die für Filtereinrichtungen, Beleuchtungseinrichtungen oder Drosselklappen und weiteres dienen. An der Außenseite sind dritte Befestigungselemente vorgesehen, die zum einen dazu dienen verschiedene Bedieneinheiten zu halten und darüber hinaus zwei Gehäuse 30 nicht nur über die Befestigungselemente 50 hintereinander sondern auch nebeneinander zu verbinden, sodass zwei Luftausströmeranordnungen 100 bereitgestellt werden können, die nebeneinander oder in einem Winkel hierzu verlaufen.

Die Bereitstellung verschieden großer Gehäuse 30 kann dazu dienen, beispielsweise ein Luftleitmodul 16 bereitzustellen, das beispielsweise fünf Lamellen 18 aufweist. Werden mehrere Lamellen 18 benötigt, so müssen längere Seitenwände 34 vorgesehen werden, die eine entsprechende Anzahl an Lageröffnungen aufweisen. Durch Auswahl der Seitenwände 34 kann daher der entsprechend gewünschten Gestalt Rechnung getragen werden. Sollen weitere Module, die davor oder danach gelagert sind eine geringere Breite aufweisen als das so gebildete zweite Luftleitmodul 16, so können Verbindungsmodule eingesetzt werden, die den Querschnitt vergrößern bzw. verkleinern und über erste Befestigungselemente 50 verbunden sind.

Fig. 4 zeigt eine schematische Darstellung einer weiteren Luftausströmeranordnung 100. Diese weist zumindest ein erstes Luftleitmodul 12 und ein zweites Luftleitmodul 16 mit Lamellen 14 und 18 auf. An den Seitenwänden 32 und 34 können wie schematisch angedeutet, Aktuatoren 40 mit Elektromotoren oder Bedienräder 42 angebracht werden. Hierzu sind entsprechende dritte Befestigungselemente an den Seitenwänden 32 und 34 vorgesehen. Diese Befestigungselemente befinden sich zu beiden Seitens des Gehäuses 30 an den Seitenwänden 32 und 34, sodass die Aktuatoren 40 und Bedienräder 42 auf der linken Seite, auf der rechten Seite und oben oder unten angeordnet werden können. Es ist auch möglich, beispielsweise eine Einheit auf der Unterseite und die andere an der Oberseite vorzusehen oder beide Einheiten an einer Seite.

Fig. 5 zeigt eine schematische Darstellung zweier Module mit Befestigungselementen 50. Fig. 5 zeigt zwei Gehäuse 30 von Modulen die entsprechende Befestigungselemente 50 aufweisen. Die Befestigungselemente 50 umfassen Haken 52 (siehe Fig. 6), die in entsprechende Aufnahmen eines korrespondieren Befestigungselements 50 eingreifen. Die gezeigte Ausgestaltung der Befestigungselemente 50 ist illustrativer Natur und schränkt daher die verschiedenen Varianten nicht ein. Befestigungselemente können daher auch anderweitig ausgebildet sein, solange eine Anordnung der Module und Befestigung in beliebiger Reihenfolge und beliebiger Orientierung zueinander möglich ist. Auch können seitlich weitere erste Befestigungselemente 50 vorgesehen sein.

Fig. 6 zeigt eine noch weitere schematische Darstellung zweier Module mit Befestigungselementen 50, wobei gezeigt ist, wie eine Anordnung in beliebiger Reihenfolge durch entsprechende Gestalt der Befestigungselemente erreicht werden kann. Zwischen die beiden Gehäuse 30 können beispielsweise weitere Module eingesetzt werden. Auch kann die Reihenfolge der Gehäuse 30 bzw. Module verändert werden, ohne dass Schwierigkeiten bei der Montage auftreten.

### Bezugszeichenliste

- 10: Blendenmodul
- 12: erstes Luftleitmodul
- 14: Lamelle
- 16: zweites Luftleitmodul
- 18: Lamelle
- 20: Beleuchtungsmodul
- 22: Filtermodul
- 24: Anschlussmodul
- 26: Drosselmodul
- 30: Gehäuse
- 32: Seitenwand
- 34: Seitenwand
- 40: Aktuator
- 42: Bedienrad
- 50: Befestigungselement
- 52: Haken
- 100: Luftausströmeranordnung

## Patentansprüche

1. Baukastensystem für eine Luftausströmeranordnung (100) für Fahrzeuge, aufweisend mindestens ein erstes Modul und ein zweites Modul, wobei die Module (10,12,16,20,22,24,26) zur Luftführung, zur Luftablenkung, zur Luftmengenregulierung, zur Luftzu- und/oder abfuhr, zur Luftbehandlung und/oder zur Inszenierung dienen, und wobei die Module jeweils erste Befestigungselemente (50) aufweisen, die eine Befestigung der mindestens zwei Module ermöglichen, wobei die mindestens zwei Module über die ersten Befestigungselemente (50) in beliebiger Reihenfolge und Anzahl in Luftströmungsrichtung hintereinander verbindbar sind, **dadurch gekennzeichnet, dass** die Module ein Gehäuse (30) aufweisen, an dem die ersten Befestigungselemente (50) angeordnet sind, wobei die Gehäuse (50) der Module über die ersten Befestigungselemente (50) miteinander verbindbar sind, wobei mindestens ein Gehäuse (30) aus mindestens zwei Gehäuseteilen besteht, die über zweite Befestigungselemente miteinander verbindbar sind und wobei mindestens ein Gehäuse (30) zwei Paare gegenüberliegender Seitenwände (32; 34) aufweist und die Seitenwände (32; 34) über zweite Befestigungselemente miteinander verbindbar sind.

2. Baukastensystem nach Anspruch 1, wobei die Gehäuse (30) dritte Befestigungselemente aufweisen, über welche Bedien-, Regel-, Beleuchtungs- und/oder Koppeleinrichtungen anfügbar sind.

3. Baukastensystem nach Anspruch 2, wobei über die dritten Befestigungselemente zwei Gehäuse (30) direkt miteinander oder über ein Verbindungsmodul, das korrespondierende vierte Befestigungselemente aufweist, verbindbar sind.

4. Baukastensystem nach einem der Ansprüche l bis 3, wobei die Module über die ersten Befestigungselemente (50) mit einem Luftkanal und/oder einer Belüftungseinrichtung verbindbar sind, wobei die entsprechenden Anschlussstellen korrespondierende erste Befestigungselemente (50) aufweisen.

5. Baukastensystem nach einem der Ansprüche l bis 4, wobei die Module mindestens ein Luftleitmodul (12; 16), ein Beleuchtungsmodul (20), ein Beduftungsmodul, ein Reinigungsmodul, ein Blendenmodul (10), ein Drosselmodul (26) und/oder ein Filtermodul (22) umfassen.

6. Baukastensystem nach einem der Ansprüche l bis 5, wobei die Module mindestens ein Luftleitelement und/oder mindestens eine Drosselklappe aufweisen.

7. Baukastensystem nach einem der Ansprüche 1 bis 6, wobei die Module aus mindestens zwei unterschiedlichen Modulen auswählbar sind und die unterschiedlichen Module sich im Hinblick auf die Länge, Breite, Dicke, Material, Anzahl an Lageröffnungen für Luftleitelemente, Drosselklappen, Anzahl, Ausbildung und Gestalt von Luftleit- und/oder Drosselelementen, Filtereinrichtungen, Beleuchtungseinrichtungen, Beduftungseinrichtungen und/oder der äußeren Gestalt unterscheiden.

## Claims

1. A modular system for an air outlet arrangement (100) for vehicles, having at least one first module and one second module, wherein the modules (10, 12, 16, 20, 22, 24, 26) for air guidance, for air deflection, for air volume regulation, for air supply and/or exhaust, for air treatment, and/or for presentation, and wherein the modules each have first fastening elements (50) which enable the at least two modules to be fastened, wherein the at least two modules can be connected one behind the other in any order and number in the direction of air flow by means of the first fastening elements (50), **characterized in that**,
the modules have a housing(30) on which the first fastening elements (50) are arranged, wherein the housings (50) of the modules can be connected to one another by means of the first fastening elements (50), wherein at least one housing (30) consists of at least two housing parts which can be connected to one another by means of second fastening elements, and wherein at least one housing (30) has two pairs of opposing side walls (32; 34), and the side walls (32; 34) can be connected to one another by means of second fastening elements.

2. A modular system according to claim 1, wherein the housings (30) have third fastening elements by which means operating, control, lighting, and/or coupling devices can be attached.

3. A modular system according to claim 2, wherein two housings (30) can be connected directly to one another by means of the third fastening elements or by means of a connecting module having corresponding fourth fastening elements.

4. A modular system according to one of claims 1 to 3, wherein the modules can be connected to an air duct and/or a ventilation device by means of the first fastening elements (50), wherein the corresponding connection points have corresponding first fastening elements (50).

5. A modular system according to one of claims 1 to 4, wherein the modules comprise at least one air control module (12; 16), a lighting module (20), a scenting module, a cleaning module, a cover module (10), a throttle module (26) and/or a filter module (22).

6. A modular system according to one of claims 1 to 5, wherein the modules have at least one air control element and/or at least one throttle valve.

7. A modular system according to one of claims 1 to 6, wherein the modules can be selected from at least two different modules, and the different modules differ in terms of length, width, thickness, material, number of bearing openings for air control elements, throttle flaps, number, design, and shape of air control elements and/or throttle elements, filter devices, lighting devices, scenting devices, and/or the external shape.

## Revendications

1. Système modulaire pour une grille d'aération (100) pour véhicules, comprenant au moins un premier module et un second module, dans lequel les modules (10, 12,16,20,22,24,26) servent à la conduite de l'air, à la déviation de l'air, à la régulation de l'air, à l'alimentation et/ou évacuation de l'air, au traitement de l'air et/ou à la mise en scène, et dans lequel les modules comprennent respectivement des premiers éléments de fixation (50), qui permettent une fixation des au moins deux modules, dans lequel les au moins deux modules peuvent être reliés successivement par l'intermédiaire des premiers éléments de fixation (50) dans un ordre et un nombre quelconques dans le sens de l'écoulement de l'air, **caractérisé en ce que** les modules comprennent un boîtier (30), au niveau duquel les premiers éléments de fixation (50) sont disposés, dans lequel les boîtiers (50) des modules peuvent être reliés les uns aux autres par l'intermédiaire des premiers éléments de fixation (50), dans lequel au moins un boîtier (30) est composé d'au moins deux pièces de boîtier, lesquelles peuvent être reliées l'une à l'autre par l'intermédiaire de deuxièmes éléments de fixation et dans lequel au moins un boîtier (30) comprend deux paires de parois latérales opposées (32 ; 34) et les parois latérales (32 ; 34) peuvent être reliées les unes aux autres par l'intermédiaire de deuxièmes éléments de fixation.

2. Système modulaire selon la revendication 1, dans lequel les boîtiers (30) comprennent des troisièmes éléments de fixation, par l'intermédiaire desquels des dispositifs de commande, de régulation, d'éclairage et/ou d'accouplement peuvent être adjoints.

3. Système modulaire selon la revendication 2, dans lequel, par l'intermédiaire des troisièmes éléments de fixation, deux boîtiers (30) peuvent être reliés directement l'un à l'autre ou par l'intermédiaire d'un module de liaison, lequel comprend des quatrièmes éléments de fixation correspondants.

4. Système modulaire selon l'une quelconque des revendications 1 à 3, dans lequel les modules peuvent, par l'intermédiaire des premiers éléments de fixation (50), être reliés à un canal d'air et/ou un dispositif d'aération, dans lequel les points de liaison correspondants comprennent des premiers éléments de liaison (50) correspondants.

5. Système modulaire selon l'une quelconque des revendications 1 à 4, dans lequel les modules comprennent au moins un module déflecteur d'air (12 ; 16), un module d'éclairage (20), un module de diffusion de parfum, un module de nettoyage, un module cache (10), un module étrangleur (26) et/ou un module de filtre (22).

6. Système modulaire selon l'une quelconque des revendications 1 à 5, dans lequel les modules comprennent au moins un élément déflecteur d'air et/ou au moins clapet d'étranglement.

7. Système modulaire selon l'une quelconque des revendications 1 à 6, dans lequel les modules peuvent être sélectionnés parmi au moins deux modules différents et les modules différents se différencient en ce qui concerne la longueur, largeur, épaisseur, le matériau, nombre d'ouvertures de palier pour éléments déflecteurs d'air, clapets d'étranglement, le nombre, la formation et forme d'éléments déflecteurs d'air et/ou éléments d'étranglement, dispositifs de filtre, dispositifs d'éclairage, dispositifs de diffusion de parfum et ou de la forme extérieure.
